# EUROPEAN PATENT APPLICATION

(11) **EP 3 057 108 A1**
(43) Date of publication of application: **17.08.2016**
(21) Application number: 14851773.3
(22) Date of filing: 15.07.2014
(51) Int. Cl.: H01B 7/295, C08K 3/22, C08K 5/29, C08K 5/3492, C08K 5/5313, C08L 67/02, H01B 7/42, H02B 7/00

(54) **HALOGEN-FREE FLAME-RETARDANT INSULATED WIRE AND HALOGEN-FREE FLAME-RETARDANT INSULATED TUBE**

(30) Priority: 09.10.2013 JP 2013212231
(71) Applicant: Sumitomo Electric Industries, Ltd., Osaka-shi, Osaka 541-0041 (JP)
(72) Inventor: FUJITA, Taro, Osaka-shi Osaka 554-0024 (JP); NISHIKAWA, Shinya, Osaka-shi Osaka 554-0024 (JP); HAYAMI, Hiroshi, Osaka-shi Osaka 554-0024 (JP); OCHI, Yuji, Kanuma-shi Tochigi 322-8585 (JP); HORI, Kenji, Kanuma-shi Tochigi 322-8585 (JP)
(74) Representative: Boult Wade Tennant
(86) International application number: PCT/JP2014/068777
(87) International publication number: WO 2015/052971

(57) **Abstract**

Provided is a halogen-free, flame-retardant insulated electrical wire which has a good balance of insulation resistance, abrasion resistance, heat deformation resistance, and the like at high levels and which has flame retardance and hot water resistance that satisfy international standards even if the insulating covering thereof has a small thickness; and a halogen-free, flame-retardant insulating tube which has a good balance of insulation resistance, abrasion resistance, heat deformation resistance, and the like at high levels and which has excellent flame retardance and hot water resistance even if the thickness thereof is small. A halogen-free, flame-retardant insulated electrical wire includes a conductor and an insulating covering, in which the insulating covering is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent, and a halogen-free, flame-retardant insulating tube has the same constitution as that of the insulating covering.

## Description

### Technical Field

The present invention relates to a halogen-free, flame-retardant insulated electrical wire having an insulating covering which does not contain a halogen, which has a good balance of insulation resistance, flame retardance, abrasion resistance, hot water resistance, low-temperature properties, heat deformation resistance, and the like at high levels, and which is suitably used in a harness or the like for automotive or railway vehicle use, and also relates to a halogen-free, flame-retardant insulating tube.

### Background Art

Insulated electrical wires in harnesses or the like for automotive or railway vehicle use may be subjected to adverse conditions, such as temperature changes from low to high, vibration, and weather, and may be subjected to heat or fire from equipment in some cases. Therefore, in order to ensure stable use in such adverse conditions, insulating coverings are required to meet predetermined criteria on mechanical strength, insulation resistance, hot water resistance (a property in which insulation performance is not degraded by being kept in hot water: hot water resistance and stability), flame retardance, abrasion resistance, heat deformation resistance, and the like, and acceptability criteria are provided in ISO and IEC standards, which are international standards, EN standards, which are European standards, and others.

In recent years, in order to prevent environmental problems and, in particular, in railway applications, to prevent smoke generation due to a fire from hindering passengers from escaping, there has been a need for halogen-free insulated electrical wires in which a halogen-free insulating material is used as an insulating covering, and in which polyvinyl chloride (PVC) or a halogen-based flame retardant is not used.

In a known halogen-free insulating material that constitutes an insulating covering, a halogen-free flame retardant, such as magnesium hydroxide, aluminum hydroxide, or a nitrogen-based flame retardant, is added to an insulating resin, such as a polyolefin resin. However, in order to have satisfactory flame retardance, it is necessary to use a large amount of the halogen-free flame retardant compared with a halogen-based flame retardant, which is likely to cause problems, such as decreased flexibility and decreased initial and after-heat-aging tensile elongation of the insulating covering.

As a halogen-free insulated electrical wire, PTL 1 discloses an insulated electrical wire characterized by including a conductor covered with a resin composition as an insulator on the outer periphery thereof, the resin composition including 100 parts by mass of a polyester resin, 1 to 30 parts by mass of a non-bromine flame retardant other than a triazine ring-containing nitrogen compound, 1 to 50 parts by mass of a polyorganosiloxane core graft copolymer, 0.5 to 10 parts by mass of an inorganic porous filler, and 0.05 to 10 parts by mass of a hydrolysis resistance improver. PTL 1 also discloses polybutylene terephthalate or the like as the polyester resin, a phosphorus compound, such as a phosphate ester compound, as the non-bromine flame retardant, and a carbodiimide compound as the hydrolysis resistance improver. It is described that, by using the resin composition including these components, it is possible to obtain an insulating layer with a thickness of 0.1 to 0.5 mm, which has excellent flame retardance, heat resistance, and hydrolysis resistance, and in which a variation in elongation properties is suppressed.

Furthermore, PTL 2 discloses a heat-resistant resin composition, as an insulating material for insulated electrical wires, which is formed by kneading a polybutylene terephthalate resin, a polyolefin, and the like, and describes that a nitrogen-containing compound may be added thereto in order to improve the flame retardance of the heat-resistant resin composition. PTL 2 also describes that examples of the nitrogen-containing compound include melamine cyanurate, melamine, cyanuric acid, isocyanuric acid, triazine derivatives, and isocyanurate derivatives.

### Citation List

### Patent Literature

PTL 1: Japanese Unexamined Patent Application Publication No. 2010-267528
PTL 2: Japanese Unexamined Patent Application Publication No. 2009-179782

### Summary of Invention

### Technical Problem

However, in recent years, in order to save energy, there has been a need to reduce the weight of insulated electrical wires of harnesses and the like for automotive and railway vehicle use, and accordingly, there has also been a need to reduce the thickness of insulating coverings. For example, in signal wires for railway vehicle use, insulating coverings are required to have a thickness of 0.25 mm or less. Even in the case of such a small thickness, insulation resistance, flame retardance, abrasion resistance, heat deformation resistance, and the like that are equivalent to those in the existing insulating coverings are required. Furthermore, in some cases, signal wires for railway vehicle use may be required to have hot water resistance that satisfies standards, such as the EN50306-2 standard.

However, when the existing halogen-free, flame-retardant resin compositions are used, it is not possible to obtain an insulated electrical wire which has a small thickness, which has a good balance of insulation resistance, flame retardance, abrasion resistance, and heat deformation resistance at high levels, and which has hot water resistance that satisfies the international standards. For example, the insulated electrical wire disclosed in each of PTL 1 and 2 does not pass the DC stability test stipulated in the EN50306-2 standard for railway vehicles. Furthermore, commonly used polyester resin compositions have a problem that insulation resistance decreases at high temperatures, and it is difficult to obtain an insulated electrical wire that satisfies the requirements described above using these resin compositions.

It is an object of the present invention to provide a halogen-free, flame-retardant insulated electrical wire which has a good balance of insulation resistance, abrasion resistance, heat deformation resistance, and the like at high levels, which has flame retardance that satisfies international standards, which has excellent hot water resistance, and which passes the DC stability test, even if the insulating covering thereof has a small thickness.

It is another object of the present invention to provide a halogen-free, flame-retardant insulating tube which has a good balance of insulation resistance, abrasion resistance, heat deformation resistance, and the like at high levels, and which has flame retardance that satisfies international standards and excellent hot water resistance, even if the thickness thereof is small.

### Solution to Problem

According to a first embodiment of the present invention, a halogen-free, flame-retardant insulated electrical wire includes a conductor and an insulating covering, in which the insulating covering is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent.

According to a second embodiment of the present invention, a halogen-free, flame-retardant insulating tube is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent. Advantageous Effects of Invention

The halogen-free, flame-retardant insulated electrical wire according to the first embodiment includes a halogen-free insulating covering, has flame retardance that is sufficient to pass the flame test stipulated in ISO or IEC standards and the test for vertical flame propagation for single insulated wire stipulated in the EN50306-2 standard and high hot water resistance that passes a DC stability test, and has a good balance of insulation resistance, abrasion resistance, and heat deformation resistance at high levels, even if the insulating covering has a small thickness. Therefore, the halogen-free, flame-retardant insulated electrical wire can be suitably used as an electrical wire that is used in a high-temperature environment, for example, for wiring in an automobile engine room, wiring in a railway vehicle, and the like.

The halogen-free, flame-retardant insulating tube according to the second embodiment of the present invention has flame retardance that is sufficient to pass the flame test and the test for vertical flame propagation for single insulated wire stipulated in ISO or IEC standards and high hot water resistance, and has a good balance of insulation resistance, abrasion resistance, and heat deformation resistance at high levels, even if the thickness thereof is small.

### Description of Embodiments

Embodiments of the present invention will be described below. It is to be understood that the present invention is not limited to the embodiments, and various modifications and changes can be made without departing from the spirit and scope of the present invention.

According to a first embodiment of the present invention, a halogen-free, flame-retardant insulated electrical wire includes a conductor and an insulating covering, in which the insulating covering is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent.

The present inventors have found that by forming an insulating covering using a polyester resin composition containing a modified polyester resin as a main component, a halogen-free flame retardant, and an ion-trapping agent, and by crosslinking the polyester resin, it is possible to obtain an insulated electrical wire which has a good balance of insulation resistance, abrasion resistance, and heat deformation resistance at high levels, and which has flame retardance that is sufficient to pass the flame test stipulated in ISO or IEC standards and hot water resistance that passes a DC stability test, and thus have completed the first embodiment of the present invention.

The DC stability test is a test which is used to evaluate hot water resistance of insulated electrical wires. Specifically, an insulated electrical wire is immersed in a 3% salt solution at 85°C, and a 300 V DC voltage is applied between the insulated electrical wire and an electrode immersed in the salt solution for 10 days. Then, hot water resistance is evaluated based on whether or not the insulated electrical wire withstands an AC voltage of 2 kV for one minute.

The polyester resin composition constituting the insulating covering in the first embodiment contains 5 to 50 parts by mass of a halogen-free flame retardant relative to 100 parts by mass of a modified polyester resin. Consequently, the flame retardance of the insulating covering is enhanced. Furthermore, the polyester resin composition is also characterized by containing 0.1 to 5 parts by mass of an ion-trapping agent. By incorporating the ion-trapping agent in the composition range described above into the polyester resin composition, hot water resistance can be improved to a level that passes the DC stability test.

The insulating covering is composed of a crosslinked product in which the polyester resin constituting the polyester resin composition is crosslinked. By crosslinking the polyester resin, even if the insulating covering has a small thickness, it is possible to provide a halogen-free, flame-retardant insulated electrical wire which has a good balance of insulation resistance, abrasion resistance, heat deformation resistance, and the like at high levels, whose flame retardance satisfies international standards, and which has excellent hot water resistance that passes the DC stability test.

A polyester resin is a polycondensate of a dicarboxylic acid, such as terephthalic acid or 1,6-naphthalenedicarboxylic acid, and a diol. The polyester resin that is used for producing the insulated electrical wire according to the first embodiment is a modified polyester resin.

Among modified polyester resins, a modified polybutylene terephthalate (PBT) or a modified polybutylene naphthalate (PBN) is preferable because of toughness, excellent electrical insulation, and a small change in electrical insulation due to relatively low water absorption.

Among modified PBTs and PBNs, more preferable are a copolymer of PBT and one or two or more selected from the group consisting of isophthalic acid, polycaprolactone, polycarbonate, and polyether, i.e., a condensation polymer of isophthalic acid, terephthalic acid, and butylene glycol, and a polyester resin selected from the group consisting of PBTs modified with polycaprolactone, polycarbonate, or polyether such that impact resistance, flexibility, and low-temperature properties are imparted thereto. Therefore, according to another preferable embodiment of the present invention, there is provided a halogen-free, flame-retardant insulated electrical wire, which is the insulated electrical wire according to the first embodiment, and in which the polyester resin is a PBT modified with one or two or more specific compounds selected from the group consisting of isophthalic acid, polycaprolactone, polycarbonate, and polyether.

As the method for crosslinking the polyester resin, for example, irradiation with ionizing radiation may be used. Examples of ionizing radiation include electromagnetic waves, such as γ rays, X rays, and ultraviolet rays, and particle beams such as α rays. However, in view of ease of control, simplicity of use of a radiation source, ionizing radiation transmission thickness, speed of crosslinking treatment, and the like, electron beams are preferable.

As the halogen-free flame retardant contained in the polyester resin composition constituting the insulating covering, a metal phosphinate, melamine cyanurate, a phosphate ester, or the like may be used. Among these, a metal phosphinate or melamine cyanurate is preferably used.

That is, metal phosphinates and melamine cyanurate have good dispersibility in the polyester resin composition and an excellent flame-retarding effect, and sufficient flame retardance can be obtained by addition of a smaller amount thereof. As a result, while maintaining a good balance of insulation resistance, abrasion resistance, heat deformation resistance, and the like at high levels, the insulated electrical wire can be made to pass the test for vertical flame propagation for single insulated wire more reliably. Therefore, according to another preferable embodiment of the present invention, there is provided a halogen-free, flame-retardant insulated electrical wire, which is the insulated electrical wire according to the first embodiment, and in which the flame retardant is a metal phosphinate or melamine cyanurate.

Note that the metal phosphinate is a compound represented by the formula (1) below.

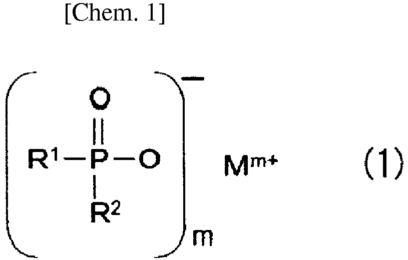

In the formula, R¹ and R² each represent an alkyl group having 1 to 6 carbon atoms or an aryl group having 12 carbon atoms or less, M represents calcium, aluminum, or zinc, m = 3 when M is aluminum, and m = 2 when M is calcium or zinc. Examples of the metal phosphinate that can be used include aluminum salts of organo-phosphinic acids, such as EXOLIT OP1230, EXOLIT OP1240, EXOLIT OP930, and EXOLIT OP935 manufactured by Clariant K.K., and blends of an aluminum salt of an organo-phosphinic acid and melamine polyphosphate.

Furthermore, as the phosphate ester, a phosphate ester having a high phosphorus content, or a phosphate ester having a high molecular weight and a high melting point is preferable because of a large effect of improving flame retardance. Examples of such a phosphate ester include a condensed phosphate ester. In particular, bisphenol-A bis(diphenylphosphate) can be preferably used.

The content of the flame retardant in the polyester resin composition is 5 to 50 parts by mass relative to 100 parts by mass of the polyester resin. When the content of the flame retardant is less than 5 parts by mass, the flame retardance of the insulating covering becomes insufficient, and it may not be possible to obtain a flame retardance that passes the test for vertical flame propagation for single insulated wire in some cases. On the other hand, when the content is more than 50 parts by mass, hot water resistance decreases, which may result in not passing the DC stability test in some cases.

The ion-trapping agent contained in the polyester resin composition constituting the insulating covering has a capability of trapping free ions in the resin. Japanese Patent No. 4337411 describes that, in an electronic component sealed with an epoxy resin, an ion-trapping agent is used in order to suppress corrosion of a conductor due to halogen ions. It is also possible to use the same ion-trapping agent in the first embodiment of the invention. The first embodiment of the invention is characterized in that by addition of the ion-trapping agent, the hot water resistance can be improved to a level that passes the DC stability test.

As the ion-trapping agent, a hydrotalcite compound represented by the formula (2) below is preferably used because it can efficiently trap free ions, in particular, sodium ions which are believed to cause decreased insulation resistance.

MgₐAl_{b}(OH)_{c}(CO₃)_{d}·nH₂O (2)

In the formula (2), a, b, c, and d are each a positive number, the relationship 2a + 3b - c - 2d = 0 is satisfied, a/b is 1.8 to 2.5, and n represents the hydration number and is 0 or a positive number. Therefore, according to another preferable embodiment of the present invention, there is provided a halogen-free, flame-retardant insulated electrical wire, which is the insulated electrical wire according to the first embodiment, and in which the ion-trapping agent is a hydrotalcite compound represented by the formula (2).

The content of the ion-trapping agent in the polyester resin composition is 0.1 to 5 parts by mass relative to 100 parts by mass of the polyester resin. When the content of the ion-trapping agent is less than 0.1 parts by mass, it is unlikely to obtain a hot water resistance that passes the DC stability test. On the other hand, when the content is more than 5 parts by mass, abrasion resistance is likely to be insufficient, and formability of the insulating covering is degraded. The content of the ion-trapping agent is preferably in the range of 0.5 to 5 parts by mass, and in this range, it is more likely to obtain excellent hot water resistance, abrasion resistance, and formability.

The polyester resin composition constituting the insulating covering according to the first embodiment contains, as essential components, the polyester resin, the halogen-free flame retardant, and the ion-trapping agent, and the polyester resin composition is composed mainly of the essential components. The expression "is composed mainly of" means that the content of the essential components is 50% by mass or more, preferably 80% by mass or more, of the polyester resin composition, and as necessary, other components may be incorporated into the polyester resin composition within a range that does not depart from the spirit and scope of the present invention. In particular, as will be described below, it is preferable that the polyester resin composition contain a carbodiimide and a multifunctional monomer in addition to the essential components.

That is, when the polyester resin composition further contains a carbodiimide, hydrolysis of the polyester resin composition is suppressed. For this reason, hot water resistance further improves, and it is possible to obtain an insulated electrical wire that passes the DC stability test more reliably. Therefore, according to another preferable embodiment of the present invention, there is provided a halogen-free, flame-retardant insulated electrical wire, which is the insulated electrical wire according to the first embodiment, and in which the polyester resin composition further contains 0.1 to 3 parts by mass of a carbodiimide relative to 100 parts by mass of the polyester resin.

The type of carbodiimide is not particularly limited. Examples of the carbodiimide include polycarbodiimide, dicyclohexylcarbodiimide, diisopropylcarbodiimide, and di-p-tolylcarbodiimide.

The content of the carbodiimide is preferably 0.1 to 3 parts by mass relative to 100 parts by mass of the polyester resin. At less than 0.1 parts by mass, it is not possible to obtain a sufficient effect of improving hot water resistance due to addition of the carbodiimide. On the other hand, at more than 3 parts by mass, the carbodiimide may be volatilized during mixing and extrusion of the material, resulting in problems, such as decreased strength due to foaming.

Furthermore, when a multifunctional monomer is incorporated into the polyester resin composition, the multifunctional monomer acts as a crosslinking aid, and the efficiency of crosslinking of the resin by irradiation with ionizing radiation improves, which is preferable. As the multifunctional monomer, a multifunctional monomer having a plurality of carbon-carbon double bonds in the molecule, such as trimethylolpropane trimethacrylate, triallylcyanurate, or triallylisocyanurate, can be preferably used. In particular, trimethylolpropane trimethacrylate is preferable because it is a liquid at normal temperature and has high compatibility with the polyester resin composition.

The content of the multifunctional monomer is preferably about 1 to 10 parts by mass relative to 100 parts by mass of the polyester resin. When the content is less than 1 part by mass, sufficient crosslinking efficiency may not be obtained in some cases. On the other hand, when the content is more than 10 parts by mass, the modulus of elasticity after being crosslinked may largely increase, and workability in wiring the insulated electrical wire may be decreased in some cases.

As other components, additives, such as an antioxidant, a deterioration inhibitor, a processing stabilizer, a coloring agent, and a lubricant, may be appropriately added into the polyester resin composition. These additives may be used alone or in combination of two or more.

The insulated electrical wire according to the first embodiment can be produced by covering a conductor with the polyester resin composition, and crosslinking the resin by irradiation with ionizing radiation or the like. The insulating covering can be formed using a known extruder, such as a melt extruder. The polyester resin composition can be produced by mixing the constituent materials using a known melt mixer, such as a single-screw extruder, a twin-screw extruder, a pressure kneader, or a banbury mixer.

According to a second embodiment of the present invention, a halogen-free, flame-retardant insulating tube is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent.

The halogen-free, flame-retardant insulating tube according to the second embodiment is composed of the same material as that of the insulating covering of the insulated electrical wire according to the first embodiment. Therefore, the halogen-free, flame-retardant insulating tube has a good balance of insulation resistance, abrasion resistance, heat deformation resistance, and the like at high levels, and has flame retardance that satisfies international standards and excellent hot water resistance, even if the thickness thereof is small.

Furthermore, since the shape and material constitution of the insulating tube according to the second embodiment is the same as those of the insulating covering of the insulated electrical wire according to the first embodiment, the same raw materials, formation conditions, process steps, and the like as those in the production of the insulating covering in the first embodiment can be employed in producing the insulating tube.

That is, the insulating tube can be produced by forming, on a linear base material, a layer composed of a crosslinked product of a polyester resin composition as in the production of the insulating covering in the first embodiment, and then pulling out the linear base material. As the linear base material, a wire made of copper, aluminum, or the like can be used. However, the linear base material is not limited to a conductor wire, and any wire that can be used for forming the insulating covering may be used.

Furthermore, as the flame retardant, a metal phosphinate or melamine cyanurate is preferably used, and as the ion-trapping agent, the hydrotalcite compound is preferably used. Furthermore, the polyester resin composition preferably contains 0.1 to 3 parts by mass of a carbodiimide.

The halogen-free, flame-retardant insulating tube thus obtained is, for example, used for protecting a connection portion of a harness of an automobile, a railway vehicle, or the like. The preferable range of the thickness of the halogen-free, flame-retardant insulating tube may vary depending on the application, and is not particularly limited. In the case where the insulating tube is used for connection of thin signal wires for railway vehicle use, the thickness of the insulating tube is preferably 0.25 mm or less as in the thin insulating covering.

### EXAMPLES

### [1] Material for polyester resin composition

First, the materials used in the experimental examples below will be described.

### 1. Constituent material of insulating covering

### [Polyester resin]

- PBT-isophthalic acid copolymer (manufactured by Polyplastics Co., Ltd.: DURANEX 600LP, melting point 170°C, indicated as "PBT-isophthalic acid" in tables)
- PBT-polycaprolactone copolymer (manufactured by Toyobo Co., Ltd.: PELPRENE S1001, melting point 200°C, indicated as "PBT-polycaprolactone" in tables)
- PBT- polycarbonate copolymer (manufactured by Toyobo Co., Ltd.: PELPRENE C2003, melting point 207°C, indicated as "PBT- polycarbonate" in tables)
- PBT-polyether copolymer (manufactured by Du Pont-Toray Co., Ltd.: Hytrel 4056, melting point 156°C, indicated as "PBT-polyether" in tables)
- PBT (homopolymer) (manufactured by Polyplastics Co., Ltd.: DURANEX 600FP)

### [Flame retardant]

- Metal phosphinate (manufactured by Clariant K.K.: EXOLIT OP1230)
- Melamine cyanurate (manufactured by Nissan Chemical Industries, Ltd.: melamine cyanurate MC860)

### [Lubricant]

• Ester-based lubricant (manufactured by NOF Corporation, UNISTER M-2222SL)
[Multifunctional monomer]
• Trimethylolpropane trimethacrylate: TMPTMA
[Carbodiimide]
• Manufactured by Nisshinbo Co., Ltd.: CARBODILITE LA-1

### [Ion-trapping agent]

- Hydrotalcite: IXE-100 (manufactured by Toagosei Co., Ltd., median size 1 µm)
- Hydrotalcite: IXE-300 (manufactured by Toagosei Co., Ltd., median size 0.5 µm)
- Hydrotalcite: IXE-770D (manufactured by Toagosei Co., Ltd., median size 6 µm)
- Hydrotalcite: KW-2100 (manufactured by Kyowa Chemical Industry Co., Ltd., specific surface 190 m²/g)
- Hydrotalcite: KW-2200 (manufactured by Kyowa Chemical Industry Co., Ltd., specific surface 125 m²/g)

### [Antioxidant]

- Hindered phenol antioxidant (manufactured by ADEKA Corporation: ADEKA STAB AO-60)

### [2] Production of insulated electrical wires

### (Experimental Examples 1 to 18)

### 1. Formation of resin composition pellets)

The components for insulating coverings were mixed in accordance with the formulation (unit of measure: part by mass) shown in Tables I to IV. Using a twin-screw mixer (45 mmφ, L/D = 42), melt mixing was performed at a cylinder temperature of 240°C and a screw rotation speed of 200 rpm, and the mixture was melt extruded into strands. Next, the molten strands were cooled and cut into pellets.

### 2. Production of insulated electrical wires

Using the resin composition pellets formed as described above and a single-screw extruder (30 mmφ, L/D = 24), extrusion was performed such that each conductor (19 tin-plated annealed copper TA strands (0.254 mmφ) stranded) with a cross-sectional area of 0.96 mm² was covered with an insulating covering at the total thickness shown in any of Tables I to IV. After cooling, the resin was crosslinked by irradiation with an electron beam in a dose of 120 kGy at an accelerating voltage of 2 MeV Thereby, insulated electrical wires were produced.

**[Table I]**

| | | | Experimental Example 1 | Experimental Example 2 | Experimental Example 3 | Experimental Example 4 | Experimental Example 5 |
|---|---|---|---|---|---|---|---|
| Insulating covering | Polyester resin | PBT-isophthalic acid | 100 | 100 | 100 | 100 | 100 |
| | | PBT-polycaprolactone | - | - | - | - | - |
| | | PBT-polycarbonate | - | - | - | - | - |
| | | PBT-polyether | - | - | - | - | - |
| | | PBT (homopolymer) | - | - | - | - | - |
| | Flame retardant | Metal phosphinate | 20 | 20 | 20 | 20 | 20 |
| | | Melamine cyanurate | - | - | - | - | - |
| | Lubricant | | 2 | 2 | 2 | 2 | 2 |
| | Multifunctional monomer | | 5 | 5 | 5 | 5 | 5 |
| | Carbodiimide | | 1 | 1 | 1 | 1 | 1 |
| | Ion-trapping agent: hydrotalcite | IXE-100 | 0.2 | 4 | 1 | - | - |
| | | IXE-300 | - | - | - | 1 | - |
| | | IXE-770D | - | - | - | - | 1 |
| | | KW2100 | - | - | - | - | - |
| | | KW2200 | - | - | - | - | - |
| | Antioxidant | | 1 | 1 | 1 | 1 | 1 |
| | Total thickness of insulating covering (mmt) | | 0.225 | 0.225 | 0.225 | 0.225 | 0.225 |
| | Outside diameter of insulated electrical wire (mmφ) | | 1.72 | 1.72 | 1.72 | 1.72 | 1.72 |
| Conductor | Material | | TA | TA | TA | TA | TA |
| | Number of strands | | 19 | 19 | 19 | 19 | 19 |
| | Strand diameter (mmφ) | | 0.254 | 0.254 | 0.254 | 0.254 | 0.254 |
| Electron beam irradiation dose (kGy) | | | 120 | 120 | 120 | 120 | 120 |

**[Table II]**

| | | | Experimental Example 6 | Experimental Example 7 | Experimental Example 8 | Experimental Example 9 |
|---|---|---|---|---|---|---|
| Insulating layer | Polyester resin | PBT-isophthalic acid | 100 | 100 | - | - |
| | | PBT-polycaprolactone | - | - | 100 | - |
| | | PBT-polycarbonate | - | - | - | 100 |
| | | PBT-polyether | - | - | - | - |
| | | PBT (homopolymer) | - | - | - | - |
| | Flame retardant | Metal phosphinate | 20 | 20 | 20 | 20 |
| | | Melamine cyanurate | - | - | - | - |
| | Lubricant | | 2 | 2 | 2 | 2 |
| | Multifunctional monomer | | 5 | 5 | 5 | 5 |
| | Carbodiimide | | 1 | 1 | 1 | 1 |
| | Ion-trapping agent: hydrotalcite | IXE-100 | - | - | 1 | 1 |
| | | IXE-300 | - | - | - | - |
| | | IXE-770D | - | - | - | - |
| | | KW2100 | 1 | - | - | - |
| | | KW2200 | - | 1 | - | - |
| | Antioxidant | | 1 | 1 | 1 | 1 |
| | Total thickness of insulating covering (mm) | | 0.225 | 0.225 | 0.225 | 0.225 |
| | Outside diameter of insulated electrical wire (mmφ) | | 1.72 | 1.72 | 1.72 | 1.72 |
| Conductor | Material | | TA | TA | TA | TA |
| | Number of strands | | 19 | 19 | 19 | 19 |
| | Strand diameter (mmφ) | | 0.254 | 0.254 | 0.254 | 0.254 |
| Electron beam irradiation dose (kGy) | | | 120 | 120 | 120 | 120 |

**[Table III]**

| | | | Experimental Example 10 | Experimental Example 11 | Experimental Example 12 | Experimental Example 13 |
|---|---|---|---|---|---|---|
| Insulating layer | Polyester resin | PBT-isophthalic acid | - | 100 | 100 | 100 |
| | | PBT-polycaprolactone | - | - | - | - |
| | | PBT-polycarbonate | - | - | - | - |
| | | PBT-polyether | 100 | - | - | - |
| | | PBT (homopolymer) | - | - | - | - |
| | Flame retardant | Metal phosphinate | 20 | - | 6 | 40 |
| | | Melamine cyanurate | - | 20 | - | - |
| | Lubricant | | 2 | 2 | 2 | 2 |
| | Multifunctional monomer | | 5 | 5 | 5 | 5 |
| | Carbodiimide | | 1 | 1 | 1 | 1 |
| | Ion-trapping agent: hydrotalcite | IXE-100 | 1 | 1 | 1 | 1 |
| | | IXE-300 | - | - | - | - |
| | | IXE-770D | - | - | - | - |
| | | KW2100 | - | - | - | - |
| | | KW2200 | - | - | - | - |
| | Antioxidant | | 1 | 1 | 1 | 1 |
| | Total thickness of insulating covering (mm) | | 0.225 | 0.225 | 0.225 | 0.225 |
| | Outside diameter of insulated electrical wire (mmφ) | | 1.72 | 1.72 | 1.72 | 1.72 |
| Conductor | Material | | TA | TA | TA | TA |
| | Number of strands | | 19 | 19 | 19 | 19 |
| | Strand diameter (mmφ) | | 0.254 | 0.254 | 0.254 | 0.254 |
| Electron beam irradiation dose (kGy) | | | 120 | 120 | 120 | 120 |

**[Table IV]**

| | | | Experimental Example 14 | Experimental Example 15 | Experimental Example 16 | Experimental Example 17 | Experimental Example 18 |
|---|---|---|---|---|---|---|---|
| Insulating layer | Polyester resin | PBT-isophthalic acid | 100 | 100 | - | 100 | 100 |
| | | PBT-polycaprolactone | - | - | - | - | - |
| | | PBT-polycarbonate | - | - | - | - | - |
| | | PBT-polyether | - | - | - | - | - |
| | | PBT (homopolymer) | - | - | 100 | - | - |
| | Flame retardant | Metal phosphinate | 20 | 20 | 20 | 3 | 60 |
| | | Melamine cyanurate | - | - | - | - | - |
| | Lubricant | | 2 | 2 | 2 | 2 | 2 |
| | Multifunctional monomer | | 5 | 5 | 5 | 5 | 5 |
| | Carbodiimide | | 1 | 1 | 1 | 1 | 1 |
| | Ion-trapping agent: hydrotalcite | IXE-100 | 0.05 | 7 | 1 | - | - |
| | | IXE-300 | - | - | - | - | - |
| | | IXE-770D | - | - | - | - | - |
| | | KW2100 | - | - | - | - | - |
| | | KW2200 | - | - | - | - | - |
| | Antioxidant | | 1 | 1 | 1 | 1 | 1 |
| | Total thickness of insulating covering (mm) | | 0.225 | 0.225 | 0.225 | 0.225 | 0.225 |
| | Outside diameter of insulated electrical wire (mmφ) | | 1.72 | 1.72 | 1.72 | 1.72 | 1.72 |
| Conductor | Material | | TA | TA | TA | TA | TA |
| | Number of strands | | 19 | 19 | 19 | 19 | 19 |
| | Strand diameter (mmφ) | | 0.254 | 0.254 | 0.254 | 0.254 | 0.254 |
| Electron beam irradiation dose (kGy) | | | | 120 | 120 | 120 | 120 |

### 3. Evaluation of resin electrical wire

### (1) Evaluation methods

### (Measurement of insulation resistance)

In accordance with JIS C3005, by applying a voltage of 300 V, insulation resistance was measured at 20°C and 90°C. The insulation resistance should be 500 MΩ·km or more at 20°C and 0.25 MΩ·km or more at 90°C.

### (Current application test) [Evaluation of hot water resistance]

### 1) Hot water resistance test in accordance with ISO6722

A 25-m insulated electrical wire, wound three or more turns, was immersed in a 1% salt solution at 85°C. A 48 V DC voltage was applied between the insulated electrical wire and an electrode immersed in the salt solution for 7 days. This current-carrying operation was repeated five times, for 35 days in total. After 35 days, an insulation resistance of 10⁹ Ω·mm or more was evaluated as pass.

### 2) DC stability test in accordance with EN50306-2

An insulated electrical wire was immersed in a 3% salt solution at 85°C, and a 300 V DC voltage was applied between the insulated electrical wire and an electrode immersed in the salt solution for 10 days. After 10 days of current carrying, the case in which the insulated electrical wire withstood an AC voltage of 2 kV for one minute was evaluated as pass.

### (Measurement of flame retardance)

### 1) 45° inclining combustion test in accordance with ISO6722

An insulated electrical wire was tilted at an angle of 45 degrees, and after the insulated electrical wire was brought into contact with the inner cone of the flame of a Bunsen burner for 15 seconds, the time (sec) until the flame went out was measured. The case in which the flame went out naturally within 70 seconds was evaluated as pass, and the case in which the time until the flame went out exceeded 70 seconds was evaluated as failure.

### 2) IEC 60332-1 test for vertical flame propagation for single insulated wire (JIS C 3665-1)

An insulated electrical wire was vertically held by a support (top support). After the inner cone of the flame of a Bunsen burner was applied at an angle of 45 degrees to the insulated electrical wire for a predetermined time (the time specified in JIS C 3665-1, varying depending on the outside diameter of the insulated electrical wire), the burner was removed, the flame was extinguished, and the extent of burning was checked. The case in which the distance between the lower edge of the top support and the onset of charring was more than 50 mm was evaluated as pass. Furthermore, the case in which the distance between the lower edge of the top support and the lower limit of burning of the specimen was more than 540 mm was evaluated as failure.

### (Hot set test) [Evaluation of heat deformation resistance]

Measurement was performed in accordance with the hot set test in JIS C 3660-2-1:2003.

The test is carried out as follows. A tube of an insulating covering is formed by extracting a conductor from an insulated electrical wire. The resulting tube is suspended in an oven at 200°C ± 3°C with a weight being suspended from the lower end of the tube such that a load of 20 N/cm² is applied, and held for 15 minutes. After 15 minutes, the length of the tube is measured, and the ratio of elongation of the tube due to the load to the initial length of the tube before application of the load (elongation under load) is calculated. Then, after the load is removed in the oven, the tube is taken out of the oven and cooled. The ratio of elongation of the tube after cooling to the initial length of the tube before application of the load (elongation after removal of load) is calculated. The case in which the elongation under load is 100% or less and the elongation after removal of load is 25% or less was evaluated as pass.

### (Measurement of abrasion resistance)

Measurement was performed in accordance with EN50305-2002:5.2 Abrasion resistance. Using a blade of a spring steel wire (piano wire) with a diameter of 0.45 mmφ, the blade is pressed against an insulated electrical wire with a load of 9 N (20°C) and moved over a distance of 10 to 20 mm with a frequency of 50 to 60 cycles per minute. The standard requires the number of abrasion cycles to be 150 or more until the blade touches the conductor as a result of abrasion of the insulating covering.

### (Extrusion appearance) [Evaluation of formability]

The appearance (extrusion appearance) of an insulating covering formed by extrusion and a cross section cut with a razor blade were visually checked and formability was evaluated. Specifically, the case in which the appearance was smooth and no foaming was observed in the cross section was evaluated as pass. On the other hand, the case in which appearance defects such as melt fracture were present or foaming was observed in the cross section was evaluated as failure.

### (Low-temperature winding test method) [Evaluation of low-temperature properties]

An insulated electrical wire was kept at -40°C for 4 hours, and then wound 10 turns around a metal bar with a diameter four times the outside diameter of the insulated electrical wire. Occurrence of cracks was visually confirmed. The case in which no cracks occurred was evaluated as pass, and the case in which cracks occurred was evaluated as failure.

### (2) Evaluation results

The evaluation results of Experimental Examples 1 to 18 are shown in Tables V to VIII.

**[Table V]**

| Test item | | | Experimental Example 1 | Experimental Example 2 | Experimental Example 3 | Experimental Example 4 | Experimental Example 5 |
|---|---|---|---|---|---|---|---|
| Insulation resistance (MΩ·km) | | 20°C | 2400 | 4200 | 3500 | 2800 | 1200 |
| | | 90°C | 0.35 | 2.5 | 1.2 | 0.93 | 0.5 |
| Current application test | ISO6722 hot water resistance test | | Pass | Pass | Pass | Pass | Pass |
| | EN50306-2 DC stability test | | Pass | Pass | Pass | Pass | Pass |
| Flame retardance | ISO6722 45° inclining combustion test | | Pass | Pass | Pass | Pass | Pass |
| | IEC 60332-1 test for vertical flame propagation for single insulated wire | | Pass | Pass | Pass | Pass | Pass |
| Hot set test | | | Pass | Pass | Pass | Pass | Pass |
| Abrasion resistance | | | 210 | 260 | 230 | 200 | 220 |
| Low-temperature winding test | | | Pass | Pass | Pass | Pass | Pass |
| Extrusion appearance | | | Pass | Pass | Pass | Pass | Pass |

**[Table VI]**

| Test item | | | Experimental Example 6 | Experimental Example 7 | Experimental Example 8 | Experimental Example 9 |
|---|---|---|---|---|---|---|
| Insulation resistance (MΩ·km) | | 20°C | 1400 | 1200 | 900 | 700 |
| | | 90°C | 0.91 | 0.82 | 0.38 | 0.58 |
| Current application test | ISO6722 hot water resistance test | | Pass | Pass | Pass | Pass |
| | EN50306-2 DC stability test | | Pass | Pass | Pass | Pass |
| Flame retardance | ISO6722 45° inclining combustion test | | Pass | Pass | Pass | Pass |
| | IEC 60332-1 test for vertical flame propagation for single insulated wire | | Pass | Pass | Pass | Pass |
| Hot set test | | | Pass | Pass | Pass | Pass |
| Abrasion resistance | | | 250 | 190 | 240 | 230 |
| Low-temperature winding test | | | Pass | Pass | Pass | Pass |
| Extrusion appearance | | | Pass | Pass | Pass | Pass |

**[Table VII]**

| Test item | | | Experimental Example 10 | Experimental Example 11 | Experimental Example 12 | Experimental Example 13 |
|---|---|---|---|---|---|---|
| Insulation resistance (MΩ·km) | | 20°C | 600 | 1200 | 900 | 1000 |
| | | 90°C | 0.55 | 0.8 | 0.87 | 2.3 |
| Current application test | ISO6722 hot water resistance test | | Pass | Pass | Pass | Pass |
| | EN50306-2 DC stability test | | Pass | Pass | Pass | Pass |
| Flame retardance | ISO6722 45° inclining combustion test | | Pass | Pass | Pass | Pass |
| | IEC 60332-1 test for vertical flame propagation for single insulated wire | | Pass | Pass | Pass | Pass |
| Hot set test | | | Pass | Pass | Pass | Pass |
| Abrasion resistance | | | 175 | 380 | 290 | 170 |
| Low-temperature winding test | | | Pass | Pass | Pass | Pass |
| Extrusion appearance | | | Pass | Pass | Pass | Pass |

**[Table VIII]**

| Test item | | | Experimental Example 14 | Experimental Example 15 | Experimental Example 16 | Experimental Example 17 | Experimental Example 18 |
|---|---|---|---|---|---|---|---|
| Insulation resistance (MΩ·km) | | 20°C | 750 | 4500 | 4600 | 650 | 1500 |
| | | 90°C | 0.11 | 3.1 | 1.6 | 0.85 | 2.9 |
| Current application test | ISO6722 hot water resistance test | | Failure | Pass | Failure | Pass | Pass |
| | EN50306-2 DC stability test | | Failure | Pass | Failure | Pass | Failure |
| Flame retardance | ISO6722 45° inclining combustion test | | Pass | Pass | Pass | Pass | Pass |
| | IEC 60332-1 test for vertical flame propagation for single insulated wire | | Pass | Pass | Pass | Failure | Pass |
| Hot set test | | | Pass | Pass | Pass | Pass | Pass |
| Abrasion resistance | | | 220 | 120 | 540 | 320 | 90 |
| Low-temperature winding test | | | Pass | Pass | Failure | Pass | Failure |
| Extrusion appearance | | | Pass | Failure | Pass | Pass | Pass |

The results shown in Tables V to VIII indicate the followings:

The halogen-free, flame-retardant insulated electrical wires of Experimental Examples 1 to 13, which satisfy the constituent features of the first embodiment of the present invention exhibit excellent flame retardance, hot water resistance, insulation resistance, abrasion resistance, and heat deformation resistance in spite of the small thickness (0.225 mm) of the insulating covering. That is, the insulated electrical wires have flame retardance that is sufficient to pass the 45° inclining combustion test stipulated in the ISO standard and the test for vertical flame propagation for single insulated wire stipulated in the IEC standard, and high hot water resistance that passes the DC stability test stipulated in the EN50306-2 standard. Furthermore, the insulated electrical wires have high insulation resistance and abrasion resistance, and pass the hot set test, indicating excellent heat deformation resistance. Moreover, the insulated electrical wires exhibit good formability (pass the extrusion appearance test).

The hydrotalcite which is an ion-trapping agent is not substantially influenced by the median size or specific surface thereof, and in the case where any of the hydrotalcites provided for testing is used, the result of the current application test is evaluated as pass, and good hot water resistance is obtained.

Regarding the flame retardant, in the case where any of the metal phosphinate of Experimental Examples 1 to 10, 12, and 13 and the melamine cyanurate of Experimental Example 11 is used, the results of the 45° inclining combustion test and the test for vertical flame propagation for single insulated wire are evaluated as pass, and thus flame retardance that satisfies the requirements of the ISO standard and the IEC standard is obtained.

In Experimental Example 14 (comparative example) in which the content of the ion-trapping agent is 0.05 parts by mass relative to 100 parts by mass of the polyester resin, the result of the current application test is evaluated as failure, and excellent hot water resistance that passes the DC stability test is not obtained. Furthermore, the result of the insulation resistance test at 90°C is less than 0.25 MΩ·km, and the insulation resistance at high temperature is low. On the other hand, in Experimental Example 15 (comparative example) in which the content of the ion-trapping agent is 7 parts by mass, the result of the abrasion resistance test shows less than 150 abrasion cycles, indicating insufficient abrasion resistance. Furthermore, the extrusion appearance is evaluated as failure, indicating low formability. These test results suggest that the content of the ion-trapping agent should be set in the range of 0.1 to 5 parts by mass relative to 100 parts by mass of the polyester resin.

In Experimental Example 16 (comparative example) in which a PBT homopolymer is used as the polyester resin, the result of the current application test is evaluated as failure, and excellent hot water resistance that passes the DC stability test is not obtained. Furthermore, the result of the low-temperature winding test is evaluated as failure, indicating insufficient low-temperature properties. Consequently, the test results suggest that, as the polyester resin, a modified polyester resin copolymerized with isophthalic acid or a polyester resin obtained by modifying a polyester, such as PBT, with polycaprolactone, polycarbonate, or polyether should be used.

Furthermore, in Experimental Example 17 (comparative example) in which the content of the flame retardant is 3 parts by mass relative to 100 parts by mass of the polyester resin, flame retardance is insufficient, and the flame retardance that passes the test for vertical flame propagation for single insulated wire stipulated in the IEC standard is not obtained. On the other hand, in Experimental Example 18 (comparative example) in which the content of the flame retardant is 60 parts by mass, the result of the DC stability test is evaluated as failure, indicating insufficient hot water resistance. Furthermore, the result of the low-temperature winding test is evaluated as failure, indicating insufficient low-temperature properties. These test results suggest that the content of the flame retardant should be set in the range of 5 to 50 parts by mass relative to 100 parts by mass of the polyester resin.

Note that, in each Experimental Example, 1 part by mass of a carbodiimide is added. It is assumed that, by the addition of the carbodiimide, the hot water resistance is further improved so as to be more likely to pass the DC stability test.

## Claims

1. A halogen-free, flame-retardant insulated electrical wire comprising a conductor and an insulating covering,
wherein the insulating covering is composed of a crosslinked product of a polyester resin composition containing 100 parts by mass of a modified polyester resin, 5 to 50 parts by mass of a halogen-free flame retardant, and 0.1 to 5 parts by mass of an ion-trapping agent.

2. The halogen-free, flame-retardant insulated electrical wire according to Claim 1, wherein the modified polyester resin is a polybutylene terephthalate modified with one or two or more specific compounds selected from the group consisting of isophthalic acid, polycaprolactone, polycarbonate, and polyether.

3. The halogen-free, flame-retardant insulated electrical wire according to Claim 1 or 2, wherein the flame retardant is a metal phosphinate or melamine cyanurate.

4. The halogen-free, flame-retardant insulated electrical wire according to any one of Claims 1 to 3, wherein the ion-trapping agent is a hydrotalcite compound represented by the formula (2):
MgₐAl_{b}(OH)_{c}(CO₃)_{d}·nH₂O (2)
(wherein a, b, c, and d are each a positive number, the relationship 2a + 3b - c - 2d = 0 is satisfied, a/b is 1.8 to 2.5, and n represents the hydration number and is 0 or a positive number).

5. The halogen-free, flame-retardant insulated electrical wire according to any one of Claims 1 to 4, wherein the polyester resin composition further contains 0.1 to 3 parts by mass of a carbodiimide relative to 100 parts by mass of the polyester resin.

6. A halogen-free, flame-retardant insulating tube comprising a crosslinked product of a polyester resin composition containing 100 parts by mass of a modified polyester resin, 5 to 50 parts by mass of a halogen-free flame retardant, and 0.1 to 5 parts by mass of an ion-trapping agent.
